# FASCICULE DE BREVET EUROPEEN

(11) **EP 3 755 103 B1**
(45) Date de publication et mention de la délivrance du brevet: **21.09.2022**
(21) Numéro de dépôt: 20179884.0
(22) Date de dépôt: 15.06.2020
(51) Int. Cl.: H04W 72/12, H04L 47/80

(54) **PROCÉDÉ ET SYSTÈME POUR LA TRANSMISSION DE DONNÉES D'UN ÉMETTEUR DE DONNÉES VERS UN SERVEUR**
VERFAHREN UND SYSTEM ZUR ÜBERTRAGUNG VON DATEN VON EINEM DATENÜBERTRAGER ZU EINEM SERVER
METHOD AND SYSTEM FOR TRANSMITTING DATA FROM A DATA TRANSMITTER TO A SERVER

(30) Priorité: 19.06.2019 FR 1906610
(43) Date de publication de la demande: 23.12.2020
(73) Titulaire: Sagemcom Energy & Telecom SAS, 92500 Rueil-Malmaison (FR)
(72) Inventeur: BAROIS, Jérôme, 92500 Rueil Malmaison (FR); JUAN, Guillaume, 92500 Rueil Malmaison (FR)
(74) Mandataire: Cabinet Le Guen Maillet

(56) Documents cités:
- WO-A1-2018/094255
- US-A1- 2011 158 110

## Description

### DOMAINE TECHNIQUE

La présente invention concerne un procédé, un dispositif et un système pour la transmission de données d'un émetteur de données vers un serveur avec au moins un niveau de qualité de service prédéterminé.

### ETAT DE LA TECHNIQUE ANTERIEURE

La sélection d'un mode de fonctionnement d'un modem réseau pour établir une communication par l'intermédiaire d'un réseau cellulaire s'appuie généralement sur les algorithmes de la norme 3GPP comme par exemple le document 3GPP TS 23.122 et plus particulièrement sur la partie intitulée "Automatic Network Selection Mode Procedure".

La logique appliquée par ces algorithmes ne conduit pas toujours à obtenir le meilleur choix pour le type de la communication. Il peut y avoir par exemple une tendance à favoriser l'obtention d'une bonne qualité de communication pour la voix plutôt qu'une bonne qualité de communication des données. Pour des communications impliquant uniquement le transfert de données, le choix fait par ces algorithmes peut ainsi ne pas être optimal.

Certain algorithmes, modems ou paramètres SIM favorisent les réseaux de dernière génération tel que le réseau 4G par rapport au réseau 3G. Ceci est parfois pénalisant lorsque qu'un réseau 4G est disponible avec un débit de données faible alors qu'est présent un réseau 3G autorisant un débit de données plus important.

Autrement dit, on peut aboutir à choisir une connexion dans la meilleure technologie d'accès disponible, même si elle offre une qualité de service insuffisante pour l'usage que l'on souhaite en faire.

La demande de brevet US 2011/158110 décrit un système et un procédé de basculement vers une autre bande de fréquence disponible pour une communication, en particulier une communication sans fil, en fonction d'une performance souhaitée. La demande de brevet WO 2018/094255 décrit un procédé de sélection d'une technologie d'accès radio en fonction de mesures, e.g. de mesures de performance, pour une classe de trafic donnée.

Afin de pallier cette problématique, de nombreux téléphones cellulaires laissent à l'utilisateur la possibilité de sélectionner manuellement les technologies d'accès autorisées. Lorsqu'il constate que sa connexion est établie mais de très mauvaise qualité (mauvais débit), l'utilisateur du téléphone mobile peut forcer une connexion à un autre réseau.

### EXPOSE DE L'INVENTION

La présente invention a pour but de résoudre les inconvénients de l'art antérieur en proposant un procédé, un dispositif et un système pour la transmission de données d'un émetteur de données vers un serveur avec au moins un niveau de qualité de service prédéterminé qui permettent de choisir les sous bandes de fréquences qui autorisent la transmission des données au moins avec ce niveau de qualité et qui permettent aussi de déterminer si une intervention sur l'émetteur doit être réalisée si aucune sous bande de fréquence ne permet d'atteindre le niveau de qualité.

A cette fin, selon un premier aspect, l'invention propose un procédé pour la transmission de données d'un émetteur de données vers un serveur avec au moins un niveau de qualité de service prédéterminé, les données étant transmises par l'intermédiaire d'un réseau cellulaire utilisant des sous bandes de fréquences, caractérisé en ce que le procédé comporte les étapes exécutées par l'émetteur de :
- sélection par un modem de l'émetteur d'au moins une sous bande parmi les sous bandes de fréquences du plan de fréquences autorisées pour la transmission de données au serveur,
- obtention, par l'émetteur, d'au moins une sous bande de fréquences sélectionnée,
- obtention d'informations représentatives de la qualité de service de la liaison entre l'émetteur et le serveur,
- vérification, par l'émetteur, si les informations représentatives de la qualité de service de la liaison entre l'émetteur et le serveur sont supérieures ou égales à un niveau de qualité prédéterminé,
- transfert, par l'émetteur, des données vers le serveur si les informations représentatives de la qualité de service de la liaison entre l'émetteur et le serveur sont supérieures ou égales au niveau de qualité prédéterminé,
- notification au modem, par l'émetteur, d'une interdiction de sélection d'au moins une sous bande de fréquences précédemment sélectionnée si les informations représentatives de la qualité de service de la liaison entre l'émetteur et le serveur ne sont pas supérieures ou égales à un niveau de qualité prédéterminé,
- exécution, par l'émetteur, des étapes de sélection, d'obtention et de notification tant que les informations représentatives de la qualité de service de la liaison entre l'émetteur et le serveur ne sont pas supérieures ou égales au niveau de qualité prédéterminé,
ledit procédé étant caractérisé en ce que si toutes les sous bandes de fréquences du plan de fréquences sont interdites, le procédé comporte en outre l'étape de notification au modem par l'émetteur, que les sous bandes de fréquences interdites peuvent de nouveau être sélectionnées et exécution des étapes de sélection, d'obtention et de notification tant que les informations représentatives de la qualité de service de la liaison entre l'émetteur et le serveur ne sont pas supérieures ou égales au niveau de qualité prédéterminé, notification par le serveur d'une absence de réception de données de l'émetteur si aucune donnée est reçue pendant une période de temps prédéterminée par le serveur.

L'invention concerne aussi un dispositif pour la transmission de données d'un émetteur de données vers un serveur avec au moins un niveau de qualité de service prédéterminé, les données étant transmises par l'intermédiaire d'un réseau cellulaire utilisant des sous bandes de fréquences, caractérisé en ce que le dispositif comporte :
- des moyens de sélection par un modem du dispositif d'au moins une sous bande parmi les sous bandes de fréquences du plan de fréquences autorisées pour la transmission de données au serveur,
- des moyens d'obtention d'au moins une sous bande de fréquences sélectionnée,
- des moyens d'obtention d'informations représentatives de la qualité de service de la liaison entre l'émetteur et le serveur,
- des moyens de vérification si les informations représentatives de la qualité de service de la liaison entre l'émetteur et le serveur sont supérieures ou égales à un niveau de qualité prédéterminé,
- des moyens de transfert des données vers le serveur si les informations représentatives de la qualité de service de la liaison entre l'émetteur et le serveur sont supérieures ou égales au niveau de qualité prédéterminé,
- des moyens de notification au modem d'une interdiction de sélection d'au moins une sous bande de fréquences précédemment sélectionnée si les informations représentatives de la qualité de service de la liaison entre l'émetteur et le serveur ne sont pas supérieures ou égales à un niveau de qualité prédéterminé,
- des moyens d'activation des moyens de sélection, d'obtention et de notification tant que les informations représentatives de la qualité de service de la liaison entre l'émetteur et le serveur ne sont pas supérieures ou égales au niveau de qualité prédéterminé.

L'invention concerne aussi un système pour la transmission de données d'un émetteur de données vers un serveur avec au moins un niveau de qualité de service prédéterminé, les données étant transmises par l'intermédiaire d'un réseau cellulaire utilisant des sous bandes de fréquences, caractérisé en ce que le système comporte :
- des moyens, compris dans l'émetteur, de sélection par un modem de l'émetteur d'au moins une sous bande parmi les sous bandes de fréquences du plan de fréquences autorisées pour la transmission de données au serveur,
- des moyens, compris dans l'émetteur, d'obtention d'au moins une sous bande de fréquences sélectionnée,
- des moyens d'obtention d'informations représentatives de la qualité de service de la liaison entre l'émetteur et le serveur,
- des moyens, compris dans l'émetteur, de vérification si les informations représentatives de la qualité de service de la liaison entre l'émetteur et le serveur sont supérieures ou égales à un niveau de qualité prédéterminé,
- des moyens, compris dans l'émetteur, de transfert des données vers le serveur si les informations représentatives de la qualité de service de la liaison entre l'émetteur et le serveur sont supérieures ou égales au niveau de qualité prédéterminé,
- des moyens, compris dans l'émetteur, de notification au modem d'une interdiction de sélection d'au moins une sous bande de fréquences précédemment sélectionnée si les informations représentatives de la qualité de service de la liaison entre l'émetteur et le serveur ne sont pas supérieures ou égales à un niveau de qualité prédéterminé,
- des moyens, compris dans l'émetteur, d'activation des moyens de sélection, d'obtention et de notification tant que les informations représentatives de la qualité de service de la liaison entre l'émetteur et le serveur ne sont pas supérieures ou égales au niveau de qualité prédéterminé,
- des moyens, compris dans le serveur, de notification d'une absence de réception de données de 1 émetteur si aucune donnée est reçue pendant une période de temps prédéterminée par le serveur.

Ainsi, la présente invention permet de choisir les sous bandes de fréquences qui autorisent la transmission des données avec un niveau de qualité prédéterminé et permet de déterminer si une intervention sur l'émetteur doit être réalisée si aucune sous bande de fréquence ne permet d'atteindre le niveau de qualité.

En exécutant itérativement les étapes de sélection, d'obtention et de notification tant que les informations représentatives de la qualité de service de la liaison entre l'émetteur et le serveur ne sont pas supérieures ou égales au niveau de qualité prédéterminé, on interdit tout transfert de données au serveur tant que la qualité de service de la liaison n'est pas obtenue. Le serveur, en détectant une absence de réception de données peut ainsi notifier qu'une intervention doit être réalisée pour améliorer la qualité de la communication. L'intervention est, par exemple, l'installation d'une antenne plus performante.

Si toutes les sous bandes de fréquences du plan de fréquences sont interdites, le procédé comporte en outre l'étape de notification, par l'émetteur au modem, que les sous bandes de fréquences interdites peuvent de nouveau être sélectionnées, et exécution des étapes de sélection, d'obtention et de notification tant que les informations représentatives de la qualité de service de la liaison entre l'émetteur et le serveur ne sont pas supérieures ou égales au niveau de qualité prédéterminé.

Selon un mode particulier de l'invention, les informations représentatives de la qualité de service de la liaison entre l'émetteur et le serveur sont déterminées en émettant des paquets de données TCP ou UDP de taille minimale ou maximale.

Selon un mode particulier de l'invention, l'émetteur est compris dans un concentrateur de données concentrant des données reçues d'une pluralité de compteurs électriques.

Le procédé comporte en outre une étape de notification par le serveur d'une absence de réception de données de l'émetteur.

L'invention concerne aussi les programmes d'ordinateur stockés sur un support d'informations, lesdits programmes comportant des instructions permettant de mettre en œuvre les procédés précédemment décrits, lorsqu'ils sont chargés et exécutés par un système informatique.

### BREVE DESCRIPTION DES DESSINS

Les caractéristiques de l'invention mentionnées ci-dessus, ainsi que d'autres, apparaîtront plus clairement à la lecture de la description suivante d'un exemple de réalisation, ladite description étant faite en relation avec les dessins joints, parmi lesquels :
[Fig. 1] représente un système dans lequel la présente invention est implémentée ;
[Fig. 2] représente un exemple d'architecture d'un concentrateur de données dans lequel la présente invention est implémentée ;
[Fig. 3] représente un exemple d'architecture d'un serveur dans lequel la présente invention est implémentée ;
[Fig. 4] représente un exemple d'algorithme exécuté par le concentrateur de données selon la présente invention ;
[Fig. 5] représente un exemple d'algorithme exécuté par le serveur selon la présente invention.

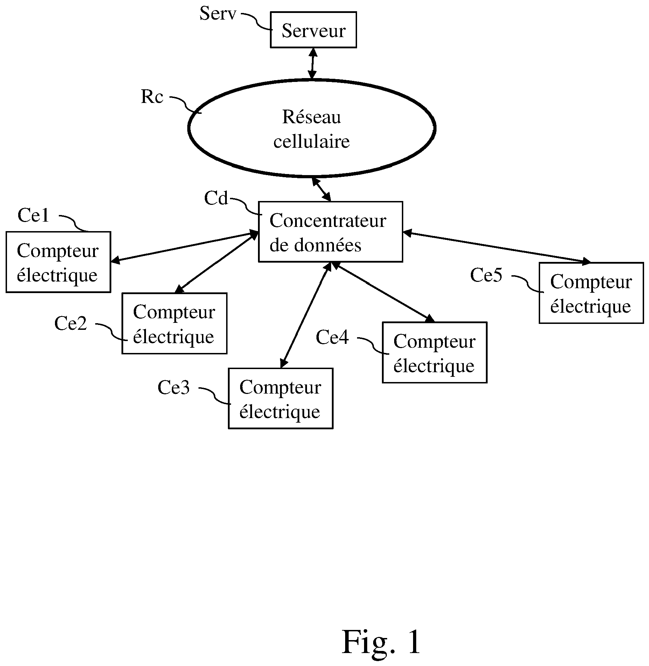

La Fig. 1 représente un système dans lequel la présente invention est implémentée.

Le système est un système de collecte de données de compteurs électriques intelligents Ce1, Ce2, Ce3, Ce4 et Ce5 par un concentrateur de données Cd qui transfère les données concentrées à destination d'un serveur Serv.

Les données des compteurs électriques Ce1, Ce2, Ce3, Ce4 et Ce5 sont obtenues par le concentrateur de données Cd par l'intermédiaire d'une liaison par courant porteur.

Le concentrateur Cd transfère ensuite les données au serveur Serv par l'intermédiaire d'un réseau sans fil cellulaire uniquement si la qualité de la liaison fournie par le réseau sans fil cellulaire est au moins égale à un niveau de qualité prédéterminé.

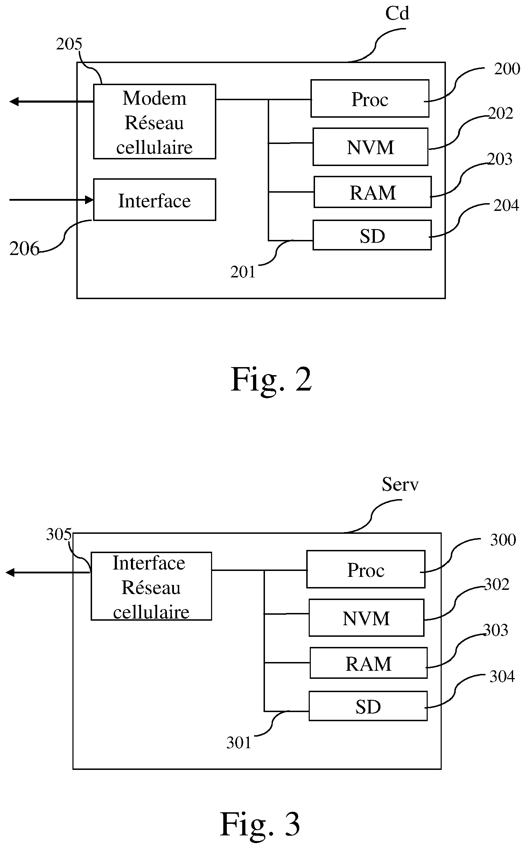

La **Fig. 2** représente un exemple d'architecture d'un concentrateur de données dans lequel la présente invention est implémentée.

Le concentrateur Cd comprend :
- un processeur, micro-processeur, ou microcontrôleur 200 ;
- une mémoire volatile 203 ;
- une mémoire non volatile NVM 202telle que par exemple une mémoire ROM et/ou Flash ;
- éventuellement, un lecteur 204 de médium de stockage, tel qu'un lecteur de carte SD (*Secure Digital Card* en anglais ou *Carte Numérique Sécurisée* en français) ou un disque dur ;
- un modem de communication 205 avec le réseau cellulaire Rc ;
- une interface 206 de communication avec les compteurs électriques Ce ;
- des bus de communication 201 reliant le processeur 200 à la mémoire non volatile 202, à la mémoire RAM 203, au lecteur de médium de stockage 204, au modem 205 et à l'interface 206. Le modem de communication est par exemple un modem commercialisé par la société Gemalto ^{©} sous la référence PLS8-E.

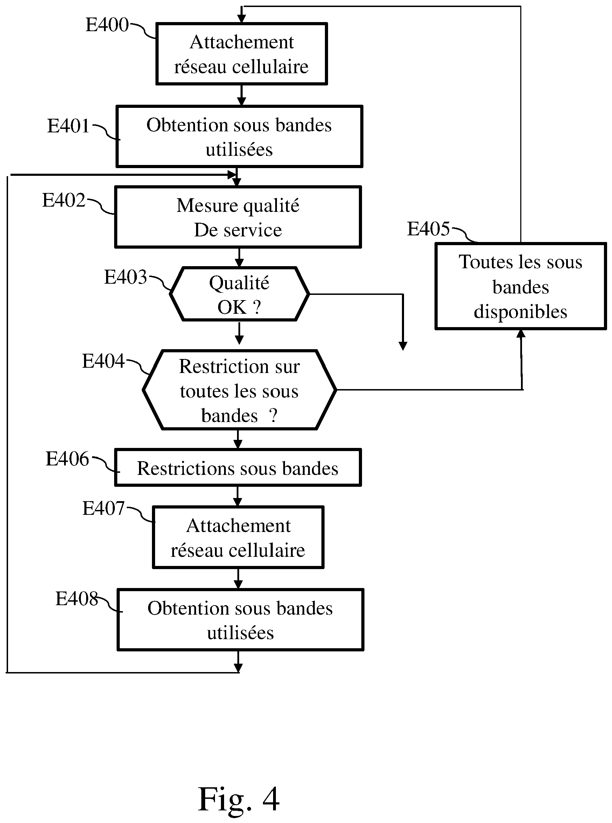

Le processeur 200 est capable d'exécuter des instructions chargées dans la mémoire volatile 203 à partir de la mémoire non volatile 202, d'une mémoire externe (non représentée), d'un support de stockage, tel qu'une carte SD ou autre, ou d'un réseau de communication. Lorsque le concentrateur Cd est mis sous tension, le processeur 200 est capable de lire de la mémoire volatile 203 des instructions et de les exécuter. Ces instructions forment un programme d'ordinateur qui cause la mise en œuvre, par le processeur 200, de tout ou partie du procédé décrit en relation avec la Fig. 4.

Tout ou partie du procédé décrit en relation avec la Fig. 4 peut être implémenté sous forme logicielle par exécution d'un ensemble d'instructions par une machine programmable, telle qu'un DSP (*Digital Signal Processor* en anglais ou *Unité de Traitement de Signal Numérique* en français) ou un microcontrôleur ou être implémenté sous forme matérielle par une machine ou un composant dédié, tel qu'un FPGA (*Field-Programmable Gate Array* en anglais ou *Matrice de Portes Programmable sur le Terrain* en français) ou un ASIC (*Application-Specific Integrated Circuit* en anglais ou *Circuit Intégré Spécifique à une Application* en français).

La **Fig. 3** représente un exemple d'architecture d'un serveur dans lequel la présente invention est implémentée.

Le serveur Serv comprend :
- un processeur, micro-processeur, ou microcontrôleur 300 ;
- une mémoire volatile 303 ;
- une mémoire non volatile NVM 302 ;
- éventuellement, un lecteur 304 de médium de stockage, tel qu'un lecteur de carte SD (*Secure Digital Card* en anglais ou *Carte Numérique Sécurisée* en français) ou un disque dur ;
- une interface réseau cellulaire 305 ;
- un bus de communication 301 reliant le processeur 300 à la mémoire ROM 302, à la mémoire RAM 303, au lecteur de médium de stockage 304 et à l'interface réseau cellulaire 305.

L'interface réseau cellulaire 305 peut être partagée ou non avec d'autres serveurs implémentant la présente invention. L'interface réseau cellulaire 305 peut ainsi être comprise dans le serveur Serv ou dans un autre serveur ou être physiquement séparée du ou des serveurs implémentant la présente invention.

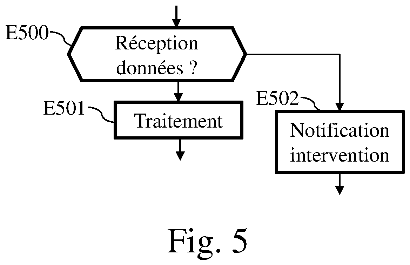

Le processeur 300 est capable d'exécuter des instructions chargées dans la mémoire volatile 303 à partir de la mémoire non volatile 302, d'une mémoire externe (non représentée), d'un support de stockage, tel qu'une carte SD ou autre, ou d'un réseau de communication. Lorsque le serveur Serv est mis sous tension, le processeur 300 est capable de lire de la mémoire volatile 303 des instructions et de les exécuter. Ces instructions forment un programme d'ordinateur qui cause la mise en œuvre, par le processeur 300, de tout ou partie du procédé décrit en relation avec la Fig. 5.

Tout ou partie du procédé décrit en relation avec la Fig. 5 peut être implémenté sous forme logicielle par exécution d'un ensemble d'instructions par une machine programmable, telle qu'un DSP (*Digital Signal Processor* en anglais ou *Unité de Traitement de Signal Numérique* en français) ou un microcontrôleur ou être implémenté sous forme matérielle par une machine ou un composant dédié, tel qu'un FPGA (*Field-Programmable Gate Array* en anglais ou *Matrice de Portes Programmable sur le Terrain* en français) ou un ASIC (*Application-Specific Integrated Circuit* en anglais ou *Circuit Intégré Spécifique à une Application* en français).

La **Fig. 4** représente un exemple d'algorithme exécuté par le concentrateur de données selon la présente invention.

Le présent algorithme est décrit dans un exemple dans lequel il est exécuté par le processeur 200 du concentrateur de données Cd.

A l'étape E400, le modem radio cellulaire 205 établit une communication en utilisant un algorithme conforme à la partie intitulée "Automatic Network Selection Mode Procedure" de la norme 3GPP telle que définie dans le document 3GPP TS 23.122 et choisit au moins une sous bande de fréquences parmi les sous bandes de fréquences du plan de fréquences autorisées pour la transmission de données au serveur.

Conformément à cette norme, le modem radio cellulaire peut choisir des sous bandes de fréquences selon des critères favorisant une bonne qualité de communication voix plutôt qu'une bonne qualité de communication des données.

A l'étape E401, le processeur 200 obtient au moins une sous bande de fréquences sélectionnée par le modem. Par exemple, le processeur 200 génère une commande prédéterminée au modem réseau cellulaire 205 pour obtenir l'index de la sous bande de fréquences sélectionnée par le modem réseau cellulaire 205.

Par exemple, le processeur 200 génère une commande prédéterminée au modem réseau cellulaire 205 pour obtenir, pour chaque sous bande de fréquences du plan de fréquences, une information indiquant si la sous bande de fréquence est utilisée ou non par le modem du réseau cellulaire 205.

A l'étape E402, le processeur 200 commande la réalisation de mesures de qualité de service sur le réseau auquel le modem radio cellulaire est connecté pour obtenir des informations représentatives de la qualité de service de la liaison entre l'émetteur et le serveur.

Par exemple, le processeur 200 commande le transfert d'un ou plusieurs paquets conformes au protocole TCP dont la quantité de données utile est égale à la quantité maximale permise par le protocole TCP, le transfert d'un ou plusieurs paquets conformes au protocole TCP dont la quantité de données utile est égale à la quantité minimale permise par le protocole TCP.

Par exemple, le processeur 200 commande le transfert d'un ou plusieurs paquets conformes au protocole UDP dont la quantité de données utile est égale à la quantité maximale permise par le protocole UDP, le transfert d'un ou plusieurs paquets conformes au protocole UDP dont la quantité de données utile est égale à la quantité minimale permise par le protocole UDP.

Par exemple, le processeur 200 effectue des commandes de type PING selon le protocole ICMP. Le processeur 200 effectue ensuite des mesures sur le nombre de paquets perdus, des délais de propagation des paquets transmis, ainsi que la variation de la latence au fil du temps.

A l'étape E403, le processeur 200 vérifie si les informations représentatives de la qualité de la liaison entre l'émetteur et le serveur sont supérieures ou égales à un niveau de qualité prédéterminé.

Si les informations représentatives de la qualité de la liaison entre l'émetteur et le serveur sont supérieures ou égales au niveau de qualité prédéterminé, le processeur 200 commande le transfert de données à destination du serveur Serv.

Si les informations représentatives de la qualité de service de la liaison entre l'émetteur et le serveur sont inférieures au niveau de qualité prédéterminé, le processeur 200 passe à l'étape E404.

A l'étape E404, le processeur 200 vérifie si toutes les sous bandes du plan de fréquences ont été interdites.

Dans l'affirmative, le processeur 200 passe à l'étape E405. Dans la négative, le processeur 200 passe à l'étape E406.

A l'étape E405, le processeur 200 génère une commande à destination du modem d'une autorisation de sélection chaque sous bande de fréquences du plan de fréquence.

Cette étape effectuée, l'algorithme retourne à l'étape E400.

A l'étape E406, le processeur 200 génère une commande à destination du modem d'une interdiction de sélection d'au moins une sous bande de fréquences précédemment sélectionnée. L'interdiction de sélection est par exemple effectuée pour l'ensemble des sous bandes de fréquences associées au réseau 4G si celles-ci ont été sélectionnées par le modem ou pour une partie seulement des sous bandes de fréquences sélectionnées par le modem.

A l'étape E407, le modem radio cellulaire 205 établit une communication avec le serveur Serv et choisit au moins une sous bande de fréquences parmi les sous bandes de fréquences du plan de fréquences non interdites pour la transmission de données au serveur Serv.

A l'étape E408, le processeur 200 obtient au moins une sous bande de fréquences sélectionnée par le modem de la même manière que celle décrite en référence à l'étape E401.

Cette opération effectuée, le présent algorithme retourne à l'étape E402.

La Fig. 5 représente un exemple d'algorithme exécuté par le serveur selon la présente invention. Le présent algorithme est décrit dans un exemple dans lequel il est exécuté par le processeur 300 du serveur Serv.

A l'étape E500, le processeur 300 vérifie si des données sont reçues du concentrateur de données Cd pendant une période de temps prédéterminée, par exemple égale à 24 heures. Dans l'affirmative, le processeur 300 passe à l'étape E501 et traite les données reçues.

Dans la négative, le processeur 300 commande la génération d'un message d'alarme pour qu'une intervention soit effectuée sur le concentrateur de données, par exemple pour une installation d'une antenne radio plus performante.

## Revendications

1. Procédé pour la transmission de données d'un émetteur de données vers un serveur avec au moins un niveau de qualité de service prédéterminé, les données étant transmises par l'intermédiaire d'un réseau cellulaire utilisant des sous bandes de fréquences le procédé comportant les étapes exécutées par l'émetteur de :
- sélection par un modem de l'émetteur d'au moins une sous bande parmi les sous bandes de fréquences du plan de fréquences autorisées pour la transmission de données au serveur,
- obtention, par l'émetteur, d'au moins une sous bande de fréquences sélectionnée,
- obtention d'informations représentatives de la qualité de service de la liaison entre l'émetteur et le serveur,
- vérification, par l'émetteur, si les informations représentatives de la qualité de service de la liaison entre l'émetteur et le serveur sont supérieures ou égales à un niveau de qualité prédéterminé,
- transfert, par l'émetteur, des données vers le serveur si les informations représentatives de la qualité de service de la liaison entre l'émetteur et le serveur sont supérieures ou égales au niveau de qualité prédéterminé,
- notification au modem, par l'émetteur, d'une interdiction de sélection d'au moins une sous bande de fréquences précédemment sélectionnée si les informations représentatives de la qualité de service de la liaison entre l'émetteur et le serveur ne sont pas supérieures ou égales au niveau de qualité prédéterminé,
- exécution, par l'émetteur, des étapes de sélection, d'obtention et de notification tant que les informations représentatives de la qualité de service de la liaison entre l'émetteur et le serveur ne sont pas supérieures ou égales au niveau de qualité prédéterminé, ledit procédé étant **caractérisé en ce que** si toutes les sous bandes de fréquences du plan de fréquences sont interdites, le procédé comporte en outre l'étape de notification au modem par l'émetteur, que les sous bandes de fréquences interdites peuvent de nouveau être sélectionnées et exécution des étapes de sélection, d'obtention et de notification tant que les informations représentatives de la qualité de service de la liaison entre l'émetteur et le serveur ne sont pas supérieures ou égales au niveau de qualité prédéterminé,
- notification par le serveur d'une absence de réception de données de l émetteur si aucune donnée est reçue pendant une période de temps prédéterminée par le serveur.

2. Procédé selon la revendication 1, caractérisé en que les informations représentatives de la qualité de service de la liaison entre l'émetteur et le serveur sont déterminées en émettant un ou plusieurs paquets de données conformes au protocole TCP ou UDP, dont la quantité de données utiles est égale à la quantité maximale permise par le protocole TCP, respectivement UDP, en émettant un ou plusieurs paquets de données conformes au protocole TCP, respectivement UDP, dont la quantité de données utile est égale à la quantité minimale permise par le protocole TCP, respectivement UDP et en mesurant un nombre de paquets perdus, des délais de propagation des paquets émis et une variation de la latence au cours du temps.

3. Procédé selon l'une quelconque des revendications 1 à 2, **caractérisé en ce que** l'émetteur est compris dans un concentrateur de données concentrant des données reçues d'une pluralité de compteurs électriques.

4. Procédé selon l'une quelconque des revendications 1 à 3, **caractérisé en ce que** le procédé comporte en outre une étape de notification par le serveur d'une absence de réception de données de l'émetteur.

5. Système pour la transmission de données d'un émetteur de données vers un serveur avec au moins un niveau de qualité de service prédéterminé, les données étant transmises par l'intermédiaire d'un réseau cellulaire utilisant des sous bandes de fréquences, caractérisé en ce le système comporte :
- des moyens, compris dans l'émetteur, de sélection par un modem de l'émetteur d'au moins une sous bande parmi les sous bandes de fréquences du plan de fréquences autorisées pour la transmission de données au serveur,
- des moyens, compris dans l'émetteur, d'obtention d'au moins une sous bande de fréquences sélectionnée,
- des moyens d'obtention d'informations représentatives de la qualité de service de la liaison entre l'émetteur et le serveur,
- des moyens, compris dans l'émetteur, de vérification si les informations représentatives de la qualité de service de la liaison entre l'émetteur et le serveur sont supérieures ou égales à un niveau de qualité prédéterminé,
- des moyens, compris dans l'émetteur, de transfert des données vers le serveur si les informations représentatives de la qualité de service de la liaison entre l'émetteur et le serveur sont supérieures ou égales au niveau de qualité prédéterminé,
- des moyens, compris dans l'émetteur, de notification au modem d'une interdiction de sélection d'au moins une sous bande de fréquences précédemment sélectionnée si les informations représentatives de la qualité de service de la liaison entre l'émetteur et le serveur ne sont pas supérieures ou égales au niveau de qualité prédéterminé,
- des moyens, compris dans l'émetteur, d'activation des moyens de sélection, d'obtention et de notification tant que les informations représentatives de la qualité de service de la liaison entre l'émetteur et le serveur ne sont pas supérieures ou égales au niveau de qualité prédéterminé,
- des moyens, compris dans le serveur, de notification d'une absence de réception de données de l'émetteur,
ledit système étant **caractérisé en ce que** lesdits moyens de notification compris dans l'émetteur sont configurés pour notifier au modem que si toutes les sous bandes de fréquences du plan de fréquences sont interdites, les sous bandes de fréquences interdites peuvent de nouveau être sélectionnées et l'émetteur comprend des moyens d'exécution des étapes de sélection, d'obtention et de notification tant que les informations représentatives de la qualité de service de la liaison entre l'émetteur et le serveur ne sont pas supérieures ou égales au niveau de qualité prédéterminé,
- des moyens, compris dans le serveur, de notification d'une absence de réception de données de 1 émetteur si aucune donnée est reçue pendant une période de temps prédéterminée par le serveur.

6. Programme d'ordinateur stocké sur un support d'informations, ledit programme comportant des instructions permettant de mettre en œuvre le procédé selon l'une quelconque des revendications 1 à 4, lorsqu'il est chargé et exécuté par un système informatique.

7. Moyens de stockage **caractérisés en ce qu'**ils stockent un programme d'ordinateur comprenant des instructions pour mettre en œuvre, par un dispositif, le procédé selon l'une quelconque des revendications 1 à 4, lorsque ledit programme est exécuté par un processeur dudit dispositif.

## Patentansprüche

1. Verfahren zur Übertragung von Daten von einem Datensender zu einem Server mit mindestens einem vorbestimmten Dienstqualitätsniveau, wobei die Daten mittels eines zellularen Netzes übertragen werden, das Frequenzteilbänder verwendet, wobei das Verfahren die folgenden vom Sender ausgeführten Schritte aufweist:
- Auswahl durch ein Modem des Senders mindestens eines Teilbands unter den Frequenzteilbändern des Frequenzplans, die für die Übertragung von Daten an den Server zugelassen sind,
- Erhalt, durch den Sender, mindestens eines ausgewählten Frequenzteilbands,
- Erhalt von Informationen, die für die Dienstqualität der Verbindung zwischen dem Sender und dem Server repräsentativ sind,
- Überprüfung, durch den Sender, ob die für die Dienstqualität der Verbindung zwischen dem Sender und dem Server repräsentativen Informationen höher als ein oder gleich einem vorbestimmten Qualitätsniveau sind,
- Transfer, durch den Sender, der Daten zum Server, wenn die für die Dienstqualität der Verbindung zwischen dem Sender und dem Server repräsentativen Informationen höher als das oder gleich dem vorbestimmten Qualitätsniveau sind,
- Mitteilung an das Modem, durch den Sender, eines Auswahlverbots mindestens eines vorher ausgewählten Frequenzteilbands, wenn die für die Dienstqualität der Verbindung zwischen dem Sender und dem Server repräsentativen Informationen nicht höher als das oder gleich dem vorbestimmten Qualitätsniveau sind,
- Ausführung, durch den Sender, der Schritte der Auswahl, des Erhalts und der Mitteilung, so lange die für die Dienstqualität der Verbindung zwischen dem Sender und dem Server repräsentativen Informationen nicht höher als das oder gleich dem vorbestimmten Qualitätsniveau sind,
wobei das Verfahren **dadurch gekennzeichnet ist, dass**, wenn alle Frequenzteilbänder des Frequenzplans verboten sind, das Verfahren außerdem den Schritt der Mitteilung an das Modem durch den Sender, dass die verbotenen Frequenzteilbänder erneut ausgewählt werden können, und Ausführung der Schritte der Auswahl, des Erhalts und der Mitteilung aufweist, so lange die für die Dienstqualität der Verbindung zwischen dem Sender und dem Server nicht höher als das oder gleich dem vorbestimmten Qualitätsniveau sind,
- Mitteilung durch den Server über ein Ausbleiben eines Empfangs von Daten vom Sender, wenn während einer vom Server vorbestimmten Zeitperiode kein Datenwert empfangen wird.

2. Verfahren nach Anspruch 1, **dadurch gekennzeichnet, dass** die für die Dienstqualität der Verbindung zwischen dem Sender und dem Server repräsentativen Informationen bestimmt werden, indem ein oder mehrere Datenpakete entsprechend dem Protokoll TCP oder UDP gesendet werden, deren Nutzdatenmenge gleich der maximalen vom Protokoll TCP bzw. UDP erlaubten Menge ist, indem ein oder mehrere Datenpakete gemäß dem Protokoll TCP bzw. UDP gesendet werden, deren Nutzdatenmenge gleich der minimalen vom Protokoll TCP bzw. UDP erlaubten Menge ist, und indem eine Anzahl von verlorenen Paketen, Ausbreitungsverzögerungen der gesendeten Pakete und eine Latenzänderung im Lauf der Zeit gemessen werden.

3. Verfahren nach einem der Ansprüche 1 bis 2, **dadurch gekennzeichnet, dass** der Sender in einem Datenkonzentrator enthalten ist, der von einer Vielzahl von Stromzählern empfangene Daten konzentriert.

4. Verfahren nach einem der Ansprüche 1 bis 3, **dadurch gekennzeichnet, dass** das Verfahren außerdem einen Schritt der Mitteilung durch den Server über ein Ausbleiben eines Empfangs von Daten vom Sender aufweist.

5. System zur Übertragung von Daten von einem Datensender zu einem Server mit mindestens einem vorbestimmten Dienstqualitätsniveau, wobei die Daten mittels eines zellularen Netzes übertragen werden, das Frequenzteilbänder verwendet, **dadurch gekennzeichnet, dass** das System aufweist:
- im Sender enthaltene Einrichtungen zur Auswahl durch ein Modem des Senders mindestens eines Teilbands unter den Frequenzteilbändern des Frequenzplans, die für die Übertragung von Daten an den Server zugelassen sind,
- im Sender enthaltene Einrichtungen zum Erhalt mindestens eines ausgewählten Frequenzteilbands,
- Einrichtungen zum Erhalt von für die Dienstqualität der Verbindung zwischen dem Sender und dem Server repräsentativen Informationen,
- im Sender enthaltene Einrichtungen zur Überprüfung, ob die für die Dienstqualität der Verbindung zwischen dem Sender und dem Server repräsentativen Informationen höher als ein oder gleich einem vorbestimmten Qualitätsniveau sind,
- im Sender enthaltene Einrichtungen zum Transfer der Daten zum Server, wenn die für die Dienstqualität der Verbindung zwischen dem Sender und dem Server repräsentativen Informationen höher als das oder gleich dem vorbestimmten Qualitätsniveau sind,
- im Sender enthaltene Einrichtungen zur Mitteilung an das Modem eines Verbots der Auswahl mindestens eines vorher ausgewählten Frequenzteilbands, wenn die für die Dienstqualität der Verbindung zwischen dem Sender und dem Server repräsentativen Informationen nicht höher als das oder gleich dem vorbestimmten Qualitätsniveau sind,
- im Sender enthaltene Einrichtungen der Aktivierung der Einrichtungen zur Auswahl, zum Erhalt und zur Mitteilung, so lange die für die Dienstqualität der Verbindung zwischen dem Sender und dem Server repräsentativen Informationen nicht höher als das oder gleich dem vorbestimmten Qualitätsniveau sind,
- im Server enthaltene Einrichtungen zur Mitteilung eines Ausbleibens des Empfangs von Daten vom Sender,
wobei das System **dadurch gekennzeichnet ist, dass** die im Sender enthaltenen Mitteilungseinrichtungen konfiguriert sind, dem Modem mitzuteilen, dass, wenn alle Frequenzteilbänder des Frequenzplans verboten sind, die verbotenen Frequenzteilbänder erneut ausgewählt werden können, und der Sender Einrichtungen zur Ausführung der Schritte der Auswahl, des Erhalts und der Mitteilung enthält, so lange die für die Dienstqualität der Verbindung zwischen dem Sender und dem Server repräsentativen Informationen nicht höher als das oder gleich dem vorbestimmten Qualitätsniveau sind,
- im Server enthaltene Einrichtungen zur Mitteilung eines Ausbleibens des Empfangs von Daten vom Sender, wenn während einer vom Server vorbestimmten Zeitperiode kein Datenwert empfangen wird.

6. Computerprogramm, das auf einem Informationsträger gespeichert ist, wobei das Programm Anweisungen aufweist, die es ermöglichen, das Verfahren nach einem der Ansprüche 1 bis 4 durchzuführen, wenn es von einem EDV-System geladen und ausgeführt wird.

7. Speichereinrichtungen, **dadurch gekennzeichnet, dass** sie ein Computerprogramm speichern, das Anweisungen enthält, um durch eine Vorrichtung das Verfahren nach einem der Ansprüche 1 bis 4 durchzuführen, wenn das Programm von einem Prozessor der Vorrichtung ausgeführt wird.

## Claims

1. Method for the transmission of data from a data transmitter to a server with at least one predetermined quality-of-service level, the data being transmitted by means of a cellular network using frequency sub-bands, the method comprising the steps performed by the transmitter of:
- selection, by a modem of the transmitter, of at least one sub-band from the frequency sub-bands of the frequency plane enabled for the transmission of data to the server,
- obtaining, by the transmitter, of at least one selected frequency sub-band,
- obtaining of information representing the quality of service of the connection between the transmitter and the server,
- checking, by the transmitter, whether the information representing the quality of service of the connection between the transmitter and the server is superior to or equal to a predetermined quality level,
- transfer, by the transmitter, of the data to the server if the information representing the quality of service of the connection between the transmitter and the server is superior to or equal to the predetermined quality level,
- notification to the modem, by the transmitter, of a prohibition of selection of at least one previously selected frequency sub-band if the information representing the quality of service of the connection between the transmitter and the server is not superior to or equal to a predetermined quality level,
- performance, by the transmitter, of the selection, obtaining and notification steps as long as the information representing the quality of service of the connection between the transmitter and the server is not superior to or equal to the predetermined quality level,
said method being **characterised in that**, if all the frequency sub-bands of the frequency plane are prohibited, the method further comprises the step of notification, by the transmitter to the modem, that the prohibited frequency sub-bands can once again be selected, and performance of the selection, obtaining and notification steps as long as the information representing the quality of service of the connection between the transmitter and the server is not superior to or equal to the predetermined quality level,
- notification by the server of an absence of reception of data from the transmitter if no data is received by the server during a predetermined period of time.

2. Method according to claim 1, **characterised in that** the information representing the quality of service of the connection between the transmitter and the server is determined by sending one or more data packets in accordance with the TCP or UDP protocol wherein the amount of payload is equal to the maximum amount allowed by the TCP or respectively UDP protocol, by sending one or more data packets in accordance with the TCP or respectively UDP protocol wherein the amount of payload is equal to the minimum amount allowed by the TCP or respectively UDP protocol, and by measuring a number of lost packets, delays in propagating sent packets and a variation in latency over time.

3. Method according to any one of claims 1 to 2, **characterised in that** the transmitter is included in a data concentrator concentrating data received from a plurality of electricity meters.

4. Method according to any one of claims 1 to 3, **characterised in that** the method further comprises a step of notification by the server of an absence of reception of data from the transmitter.

5. System for the transmission of data from a data transmitter to a server with at least one predetermined quality-of-service level, the data being transmitted by means of a cellular network using frequency sub-bands, **characterised in that** the device comprises:
- means, included in the transmitter, for the selection, by a modem of the device, of at least one sub-band from the frequency sub-bands of the frequency plane enabled for the transmission of data to the server,
- means, included in the transmitter, for obtaining at least one selected frequency sub-band,
- means for obtaining information representing the quality of service of the connection between the transmitter and the server,
- means, included in the transmitter, for checking whether the information representing the quality of service of the connection between the transmitter and the server is superior to or equal to a predetermined quality level,
- means, included in the transmitter, for transferring data to the server if the information representing the quality of service of the connection between the transmitter and the server is superior to or equal to the predetermined quality level,
- means, included in the transmitter, for notifying to the modem a prohibition of selection of at least one previously selected frequency sub-band if the information representing the quality of service of the connection between the transmitter and the server is not superior to or equal to the predetermined quality level,
- means, included in the transmitter, for activating the selection, obtaining and notification means as long as the information representing the quality of service of the connection between the transmitter and the server is not superior to or equal to the predetermined quality level,
- means, included in the server, for notifying an absence of reception of data from the transmitter,
said system being **characterised in that** said notification means included in the transmitter are configured to notify to the modem that, if all the frequency sub-bands of the frequency plane are prohibited, the prohibited frequency sub-bands can once again be selected, and the transmitter comprises means for performing the selection, obtaining and notification steps as long as the information representing the quality of service of the connection between the transmitter and the server is not superior to or equal to the predetermined quality level,
- means, included in the server, for notifying an absence of reception of data from the transmitter if no data is received during a period of time predetermined by the server.

6. Computer program stored on an information carrier, said program comprising instructions for implementing the method according to any one of claims 1 to 4, when it is loaded into and executed by a computer system.

7. Storage means, **characterised in that** they store a computer program comprising instructions for implementing, by a device, the method according to any one of claims 1 to 4, when said program is executed by a processor of said device.
